# EUROPÄISCHE PATENTANMELDUNG

(11) **EP 4 016 232 A1**
(43) Veröffentlichungstag der Anmeldung: **22.06.2022**
(21) Anmeldenummer: 22151329.4
(22) Anmeldetag: 24.01.2018
(51) Int. Cl.: G05D 1/02

(54) **VERFAHREN ZU EINER ERFASSUNG ZUMINDEST EINES ARBEITSBEREICHS EINES AUTONOMEN ARBEITSGERÄTS**

(30) Priorität: 24.02.2017 DE 102017203055
(62) Teilanmeldung aus: 18704155.3
(71) Anmelder: Robert Bosch GmbH, 70442 Stuttgart (DE)
(72) Erfinder: Visel, Benjamin, 75378 Bad Liebenzell-Moettlingen (DE); Biber, Peter, 72119 Ammerbuch (DE); Weiss, Ulrich, 71634 Ludwigsburg (DE); Lang, Stefan, 71726 Benningen (DE); Coote, Chris, Colchester,Essex, CO4 5ZQ (GB); Abbott, Paul, Swaffham Prior, CB25 0JZ (GB); Laible, Stefan, 72074 Tuebingen (DE); Wenger, Maximilian, 89584 Ehingen (Donau) (DE); Beti, Melita, Stowmarket, IP14 1EY (GB)

(57) **Zusammenfassung**

Die Erfindung geht aus von Verfahren zu einer Erfassung zumindest eines Arbeitsbereichs (10a; 10b; 10c) eines autonomen Arbeitsgeräts (30a; 30b; 30c), insbesondere eines autonomen Rasenmähers, insbesondere mittels zumindest einer ersten Erfassungseinheit (32a; 32b; 32c) und mittels zumindest einer zweiten Erfassungseinheit (34a; 34b; 34c).

Es wird vorgeschlagen, dass in zumindest einem ersten Verfahrensschritt, insbesondere mittels der ersten Erfassungseinheit (32a; 32b; 32c), eine Umgebung (12a; 12b; 12c) erfasst wird und in zumindest einem zweiten Verfahrensschritt, insbesondere mittels der zweiten Erfassungseinheit (34a; 34b; 34c), der Arbeitsbereich (10a; 10b; 10c) innerhalb der Umgebung (12a; 12b 12c) definiert wird.

## Beschreibung

### Stand der Technik

Autonome Rasenmäher, welche ein Installieren eines Einfassungsdrahts zur Abgrenzung eines Arbeitsbereichs benötigen, sind aus dem Stand der Technik bereits allgemein bekannt.

Aus der Druckschrift US 2015/0271991 A1 ist ein Verfahren bekannt, bei welchem ein Arbeitsbereich mittels eines manuellen Schiebens eines autonomen Rasenmähers erfasst wird.

Weiterhin ist aus der Druckschrift WO 2016/105609 A1 ein Anlernverfahren bekannt, bei welchem ein Anlernen mittels einer Fernsteuerung erfolgt. Die Fernsteuerung steuert einen autonomen Rasenmäher entlang einer Grenze. Hierdurch wird ein Arbeitsbereich erfasst.

Des Weiteren ist ein Anlernverfahren mittels temporären Grenzen bekannt, wie beispielsweise aus der Druckschrift WO 2016/097900 A1 bekannt ist.

### Offenbarung der Erfindung

Die Erfindung geht aus von einem Verfahren zu einer Erfassung zumindest eines Arbeitsbereichs eines autonomen Arbeitsgeräts, insbesondere eines autonomen Rasenmähers, insbesondere mittels zumindest einer ersten Erfassungseinheit und insbesondere mittels zumindest einer zweiten Erfassungseinheit.

Es wird vorgeschlagen, dass in zumindest einem ersten Verfahrensschritt, insbesondere mittels der ersten Erfassungseinheit, eine Umgebung insbesondere des autonomen Arbeitsgeräts erfasst wird und in zumindest einem zweiten Verfahrensschritt, insbesondere mittels der zweiten Erfassungseinheit, der Arbeitsbereich innerhalb der Umgebung definiert wird.

Unter einer "Erfassung eines Arbeitsbereichs" soll in diesem Zusammenhang insbesondere ein Vorgang verstanden werden, bei dem ein vorzugsweise durch einen Benutzer definierter Arbeitsbereich zumindest teilweise erkannt und/oder erfasst wird, insbesondere virtuell. Besonders bevorzugt soll darunter ein Vorgang verstanden werden, bei dem ein Arbeitsbereich zumindest zweidimensional und vorzugsweise dreidimensional erfasst wird. Ferner soll in diesem Zusammenhang unter einem "Arbeitsbereich" insbesondere ein räumlicher Bereich innerhalb einer Umgebung verstanden werden, der zu einer Bearbeitung durch das autonome Arbeitsgerät vorgesehen ist. In diesem Zusammenhang soll unter einer "Bearbeitung des Arbeitsbereichs" insbesondere ein Bewegen und/oder Entfernen und/oder Hinzufügen zumindest eines Elements in dem Arbeitsbereich verstanden werden. Insbesondere kann es sich bei der Bearbeitung um eine Bodenbearbeitung, insbesondere ein Rasenmähen und/oder Vertikutieren, und/oder um eine Bodenreinigung, insbesondere ein Staubsaugen, und/oder um einen Lastentransport und/oder um eine vertikale Bearbeitung, insbesondere eine Fensterreinigung und/oder eine Wandreinigung und/oder Objektreinigung, und/oder um eine additive Bearbeitung, insbesondere ein Sähen und/oder ein Verlegen zumindest eines Elements, wie beispielsweise Samen und/oder Steine, handeln. Insbesondere soll unter einem Lastentransport ein Bewegen, insbesondere ein Verschieben und oder Tragen, verschiedener Elemente in einem Arbeitsbereich verstanden werden.

Des Weiteren soll in diesem Zusammenhang unter einem "autonomen Arbeitsgerät" insbesondere ein Gerät verstanden werden, das sich, insbesondere nach einem Anlernprozess, selbsttätig in einem Arbeitsbereich fortbewegt, orientiert und/oder navigiert. Der Ausdruck "selbsttätig fortbewegen, orientieren und/oder navigieren" soll hier insbesondere eine Fortbewegung, eine Orientierung und/oder Navigation des Arbeitsgeräts, insbesondere nach einem Anlernprozess, ohne einen menschlichen Eingriff definieren. Vorzugsweise bewegt sich das autonome Arbeitsgerät nach einem von einem Bediener mit dem autonomen Arbeitsgerät durchgeführten Anlernprozess selbsttätig in dem Arbeitsbereich fort. Das autonome Arbeitsgerät kann hierbei insbesondere als autonomer Staubsauger, als autonome Kehrmaschine, als autonomer Gabelstapler, als autonomes Transportfahrzeug, als autonomes Fluggerät und/oder als autonomes Agrargerät ausgebildet sein. Bevorzugt ist das autonome Arbeitsgerät als ein autonomer Rasenmäher ausgebildet, der dazu vorgesehen ist, eine als Rasenfläche ausgebildete Arbeitsfläche und/oder eine als Gartenumgebung ausgebildete Arbeitsumgebung abzufahren und/oder zu bearbeiten. Hierzu weist das autonome Arbeitsgerät besonders bevorzugt eine als Mähwerkeinheit ausgebildete Arbeitsflächenbearbeitungseinheit auf. Die Arbeitsflächenbearbeitungseinheit kann hierbei mittels einer Antriebseinheit des autonomen Arbeitsgeräts, die zumindest zu einem Antrieb einer Fahrwerkseinheit des autonomen Arbeitsgeräts vorgesehen ist, oder mittels einer separaten Mähwerkantriebseinheit des autonomen Arbeitsgeräts, die getrennt von der Antriebseinheit zum Antrieb der Fahrwerkseinheit ausgebildet ist, angetrieben werden.

Darüber hinaus soll in diesem Zusammenhang unter einer "Erfassungseinheit" insbesondere eine Vorrichtung verstanden werden, welche zu einer Erfassung zumindest einer Kenngröße eines Arbeitsbereichs und/oder einer Umgebung vorgesehen ist. Vorzugsweise soll darunter insbesondere eine Vorrichtung verstanden werden, die dazu vorgesehen ist, zumindest eine Kenngröße, welche zu einer Definition und/oder Erfassung des Arbeitsbereichs und/oder der Umgebung dient, während einer initialen Definition und/oder Erfassung des Arbeitsbereichs und/oder Umgebung zu erfassen. Bevorzugt soll darunter insbesondere eine Vorrichtung verstanden werden, welche zu einer Erfassung eines Lage- und/oder Formparameters des Arbeitsbereichs und/oder der Umgebung vorgesehen ist. Vorzugsweise weist die Erfassungsvorrichtung dazu insbesondere eine Sensoreinheit auf. Dabei soll unter einer "Sensoreinheit" insbesondere eine Einheit verstanden werden, die dazu vorgesehen ist, zumindest eine Kenngröße und/oder eine physikalische Eigenschaft aufzunehmen, wobei die Aufnahme vorteilhaft passiv, insbesondere durch eine Erfassen von Eigenschaftsänderungen eines Sensorbauteils, wie zum Beispiel durch das Empfangen von elektromagnetischen Strahlen und/oder Druck stattfinden kann. Besonders bevorzugt wird die Erfassung zusätzlich aktiv durchgeführt, wie insbesondere durch Erzeugen und Aussenden eines elektrischen und/oder magnetischen und/oder elektromagnetischen Messsignals sowie ein Empfangen dieses Messsignals. Insbesondere können die erste Erfassungseinheit und die zweite Erfassungseinheit zumindest teilweise einstückig miteinander ausgebildet sein. Darunter, dass zwei Einheiten "zumindest teilweise einstückig miteinander ausgebildet sind", soll in diesem Zusammenhang insbesondere verstanden werden, dass die Erfassungseinheiten zumindest ein gemeinsames Element aufweisen. Vorzugsweise bilden die erste Erfassungseinheit und die zweite Erfassungseinheit eine Einheit. Insbesondere ist die Einheit als Kamera und/oder LiDAR ausgebildet, wobei insbesondere die Kamera und/oder LiDAR vorzugsweise das Umfeld erfasst und den Arbeitsbereich definiert. Insbesondere kann der erfasste Arbeitsbereich, insbesondere innerhalb der Umgebung, weiterhin optimiert und/oder verändert werden.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

In diesem Zusammenhang soll unter einer "Definition eines Arbeitsbereich" insbesondere ein Verfahrensschritt verstanden werden, in welchem eine Begrenzung, insbesondere eine Grenze, des Arbeitsbereichs festgelegt wird, insbesondere durch einen Nutzer.

Unter einer "Umgebung" soll in diesem Zusammenhang insbesondere ein räumlicher Bereich verstanden werden, welcher vorzugsweise mittels des autonomen Arbeitsgeräts erreichbar ist. Insbesondere soll darunter ein räumlicher Bereich verstanden werden, welcher zumindest teilweise als Arbeitsbereich in Frage kommt. Ferner soll darunter insbesondere ein räumlicher Bereich verstanden werden, welcher vorzugsweise mittels der ersten und/oder der zweiten Erfassungseinheit erfassbar ist.

Vorteilhaft findet die Erfassung der Umgebung in dem ersten Verfahrensschritt autonom statt. Darunter soll insbesondere verstanden werden, dass die Umgebung unabhängig von einer Bewegung eines Nutzers erfasst wird. In dem zweiten Verfahrensschritt wird vorzugsweise der Arbeitsbereich in der Umgebung definiert. Insbesondere kann auch eine Mehrzahl von Arbeitsbereichen in der Umgebung definiert werden und/oder ein Arbeitsbereich kann in mehrere getrennte Unterbereiche aufgeteilt sein. Vorteilhaft ist lediglich ein initiales Erfassen der Umgebung notwendig, wobei der zumindest eine Arbeitsbereich in der Umgebung vorteilhaft flexibel veränderbar ist. Insbesondere wird in zumindest einem Verfahrensschritt jegliche Elemente, welche Teil der Umgebung sind, mittels der ersten Erfassungseinheit erfasst, wie zum Beispiel ein Baum und/oder ein Teich und/oder eine Hecke und/oder ein Tisch und/oder eine Hauswand. Besonderes bevorzugt werden die erfassten Elemente während der Erfassung der Umgebung detektiert. Vorzugsweise werden die Elemente als grobe Grenze und/oder als Gefahr und/oder Hindernis detektiert. Insbesondere werden die erfassten Elemente bei einer Definition des Arbeitsbereichs berücksichtigt und insbesondere gemieden. Unter "gemieden" soll in diesem Zusammenhang insbesondere verstanden werden, dass das autonome Arbeitsgerät in zumindest einem Betriebszustand einen Abstand zu dem erfassten Element einhält, welcher insbesondere zumindest 0,05 m, vorzugsweise mindestens 0,1 m, vorteilhaft zumindest 0,15 m, besonders vorteilhaft mindestens 0,2 m und besonders bevorzugt zumindest 0,25 m beträgt. Vorzugsweise wird in dem zweiten Verfahrensschritt der Arbeitsbereich in der Umgebung definiert.

Durch eine solche Ausgestaltung kann eine vorteilhafte Erfassung eines Arbeitsbereichs eines autonomen Arbeitsgeräts bereitgestellt werden. Insbesondere kann eine Erfassung einer Mehrzahl von Arbeitsbereichen in der Umgebung ermöglicht werden, welche insbesondere auch miteinander kombiniert und/oder zusammengelegt werden können. Ferner können auf vorteilhaft einfache Art Unter-Arbeitsbereiche definiert werden. Weiterhin kann vorteilhaft ein Definieren des Arbeitsbereichs schneller durchgeführt werden. Ferner kann zudem vorteilhaft eine sichere und/oder zuverlässige Definition des Arbeitsbereichs erreicht werden. Weiterhin können Gefahren für das autonome Arbeitsgerät vorteilhaft schneller detektiert werden.

In einer bevorzugten Ausgestaltung wird vorgeschlagen, dass in dem zweiten Verfahrensschritt der Arbeitsbereich mittels zumindest eines Markierungsobjekts definiert wird. Unter einem "Markierungsobjekt" soll insbesondere ein Objekt verstanden werden, welches dazu vorgesehen ist, einen Arbeitsbereich, insbesondere eine Berandung des Arbeitsbereichs, zumindest teilweise zu markieren. Insbesondere überträgt das Markierungsobjekt aktiv und/oder passiv ein Signal an die zweite Erfassungseinheit. Insbesondere kann das Markierungsobjekt plastisch und/oder virtuell ausgebildet sein. Hierbei soll unter einem "virtuellen Markierungsobjekt" insbesondere ein Objekt verstanden werden, welches insbesondere mittels einer mobilen Einheit vorzugsweise auf einem Bildschirm virtuell entlang zumindest einer Grenze der Umgebung geführt wird, wie zum Beispiel zumindest ein Fadenkreuz, welches insbesondere auf einem Smartphone Bildschirm entlang einer Grenze geführt wird. Insbesondere soll unter einem "plastischen Markierungsobjekt" insbesondere ein Objekt verstanden werden, welches aktiv entlang der Grenze bewegt wird. Insbesondere kann das Markierungsobjekt zumindest teilweise als eine Silhouette eines Nutzers und/oder zumindest teilweise als ein Laserpunkt und/oder zumindest teilweise als ein Marker, wie zum Beispiel ein befestigbarer, insbesondere aufklebbarer, Marker, und/oder als wenigstens ein Teil eines Kleidungsstücks und/oder zumindest teilweise als ein Sender, insbesondere als ein Funksender und/oder als ein Lichtemitter und/oder als ein Ultraschallsender, ausgebildet sein. Hierdurch kann vorteilhaft eine flexible Nutzung bereitgestellt werden. Ferner kann vorteilhaft ein Definieren eines Arbeitsbereichs vereinfacht werden.

Weiterhin wird vorgeschlagen, dass in dem zweiten Verfahrensschritt eine Bewegung des Markierungsobjekts erfasst wird. Insbesondere wird das Markierungsobjekt virtuell und/oder tatsächlich entlang einer Grenze bewegt, insbesondere durch einen Nutzer. Insbesondere bewegt und/oder trägt und/oder schiebt und/oder steuert der Nutzer das Markierungsobjekt. Insbesondere wird mittels der zweiten Erfassungseinheit die Bewegung des Markierungsobjekts erfasst. Hierdurch kann vorteilhaft eine möglichst exakte Bestimmung des Arbeitsbereichs bereitgestellt werden.

Weiterhin wird vorgeschlagen, dass die Bewegung des Markierungsobjekts zumindest weitgehend unabhängig von einer Bewegung des autonomen Arbeitsgeräts erfasst wird. Unter "zumindest weitgehend unabhängig" soll insbesondere verstanden werden, dass insbesondere bei der Definition des Arbeitsbereichs, eine Trajektorie des Markierungsobjektes verschieden von einer Trajektorie des Rasenmähers ausgebildet ist. Bevorzugt bleibt das autonome Arbeitsgerät in dem zweiten Verfahrensschritt an zumindest einer Stelle der Umgebung stehen, während das Markierungsobjekt erfasst wird. Alternativ kann das autonome Arbeitsgerät dem Markierungsobjekt zumindest teilweise folgen, insbesondere um eine zuverlässige Erfassung des Markierungsobjekts sicherzustellen, beispielsweise falls dieses zumindest teilweise für das autonome Arbeitsgerät verdeckt ist, insbesondere durch Vegetation. Vorteilhaft folgt das autonome Arbeitsgerät in einem Abstand von insbesondere maximal 10 m, vorzugsweise höchstens 5 m, vorteilhaft maximal 3 m, besonders vorteilhaft höchstens 2 m und besonders bevorzugt maximal 1 m. Insbesondere ist die zweite Erfassungseinheit zusätzlich dazu vorgesehen, weitere Elemente, welche Teil der Umgebung bilden und insbesondere eine Gefahr für das autonome Arbeitsgerät bilden, zu detektieren. Vorteilhaft erfolgt das Detektieren während eines zumindest teilweisen Verfolgens des Markierungsobjekts. Hierdurch kann vorteilhaft ein Definieren des Arbeitsbereichs komfortabel und/oder zuverlässig erfolgen. Ferner kann vorteilhaft eine Grenzerkennung weiter optimiert werden. Weiterhin können vorteilhaft Gefahren für das autonome Arbeitsgerät schnell und einfach erkannt werden.

In einer weiteren Ausgestaltung wird vorgeschlagen, dass das Markierungsobjekt in dem zweiten Verfahrensschritt elektromagnetisch erfasst wird. Insbesondere kann das Markierungsobjekt optisch erfasst werden, beispielsweise mittels einer Kamera, insbesondere einer optischen Kamera und/oder einer Infrarot-Kamera, und/oder mittels LiDAR und/oder mittels LaDAR und/oder mittels Radar und/oder mittels Mikrowellen. Alternativ oder zusätzlich kann das Markierungsobjekt elektromagnetische Wellen emittieren, welche vorteilhaft von der zweiten Erfassungseinheit erfasst werden. Hierdurch kann vorteilhaft eine möglichst einfache Definierung des Arbeitsbereichs bereitgestellt werden.

Ferner wird vorgeschlagen, dass die Umgebung in dem ersten Verfahrensschritt elektromagnetisch erfasst wird. Insbesondere wird zur Erfassung der Umgebung eine Erfassungseinheit, insbesondere die erste Erfassungseinheit, verwendet, welche insbesondere zumindest teilweise Teil einer Drohne, insbesondere einer Flugdrohne, und/oder eines Satelliten und/oder einer mobilen Einheit, insbesondere eines Smartphones und/oder eines Tablets, und/oder einer Einheit am autonomen Arbeitsgerät und/oder einer Einheit des autonomen Arbeitsgeräts ist. Insbesondere wird die Umgebung optisch erfasst, beispielsweise mittels einer Kamera, insbesondere einer optischen Kamera und/oder einer Infrarot-Kamera, und/oder mittels LiDAR und/oder mittels LaDAR und/oder mittels Radar und/oder mittels Mikrowellen. Alternativ oder zusätzlich werden Sender in der Umgebung aufgestellt, welche vorzugsweise elektromagnetische Strahlen aussenden und von der ersten Erfassungseinheit erfasst werden. Insbesondere sind die Sender dazu vorgesehen Gefahren und/oder Grenzen zu markieren, wobei insbesondere mittels der Erfassungseinheit vorzugsweise eine Karte bestehend aus den Positionen der Gefahren und/oder Grenzen erstellt wird. Hierdurch kann insbesondere ein Erfassen der Umgebung weiterhin beschleunigt werden. Hierdurch kann vorteilhaft eine Umgebung möglichst einfach detektiert werden.

Weiterhin wird vorgeschlagen, dass in zumindest einem Verfahrensschritt mittels einer Recheneinheit eine Karte des Arbeitsbereichs generiert wird. Vorzugsweise wird die Karte während des zweiten Verfahrensschritts, insbesondere beim Erfassen der Grenzdaten, generiert. Unter "generiert" soll in diesem Zusammenhang insbesondere das Hinterlegen von Grenzdaten und/oder Flächendaten des Arbeitsbereichs verstanden werden. Vorzugsweise soll darunter eine zumindest teilweise Erstellung einer virtuellen Karte des Arbeitsbereichs verstanden werden. Dabei soll unter einer "Karte" insbesondere eine, vorzugsweise digitale, Darstellung eines Arbeitsbereichs und/oder einer Umgebung des Arbeitsbereichs verstanden werden. Vorzugsweise soll darunter insbesondere eine topographische Karte verstanden werden, die insbesondere Informationen zu Höhen, Maßstab, Untergrundbeschaffenheiten und/oder möglichen Hindernissen des Arbeitsbereichs umfasst. Grundsätzlich wäre jedoch auch denkbar, dass bei der Generierung der Karte lediglich Navigationsdaten hinterlegt werden, welche für eine Bearbeitung des Arbeitsbereichs anzuwenden sind. Insbesondere weist die erste und/oder die zweite Erfassungseinheit die Recheneinheit auf. Hierdurch kann vorteilhaft eine Effizienz gesteigert werden. Ferner kann eine einfache Überprüfung des ermittelten Arbeitsbereichs durch einen Nutzer ermöglich werden. Zusätzlich können weitere Analysemöglichkeiten erschlossen werden. Beispielsweise kann eine graphische Darstellung des Arbeitsbereichs einem Nutzer bereitgestellt werden, anhand der insbesondere ein Arbeitszustand des autonomen Arbeitsgeräts angezeigt werden kann. Insbesondere kann eine Fernwartung erleichtert werden.

In einer weiteren Ausgestaltung wird vorgeschlagen, dass in dem zweiten Verfahrensschritt zumindest eine Positionskenngröße des autonomen Arbeitsgeräts erfasst wird. Unter einer "Positionskenngröße" soll in diesem Zusammenhang insbesondere eine die Position des autonomen Arbeitsgeräts kennzeichnende Größe verstanden werden, welche vorzugsweise mittels Koordinaten und/oder odometrisch der ersten und/oder zweiten Erfassungseinheit zur Verfügung steht. Insbesondere wird die Positionskenngröße mittels Sensoren einer dritten Erfassungseinheit bestimmt. Vorteilhaft wird die Positionskenngröße mittels GPS und/oder odometrisch bestimmt. Insbesondere ist die Recheneinheit vorteilhaft dazu vorgesehen, anhand der Bewegung des Markierungsobjekts zumindest eine weitere Positionskenngröße des Markierungsobjektes zu bestimmen. Vorzugsweise ist die Recheneinheit zusätzlich dazu vorgesehen, abhängig von der Positionskenngröße relativ zur weiteren Positionskenngröße eine Arbeitsbereichskarte zu erstellen. Vorzugsweise umfasst die dritte Erfassungseinheit weitere Sensoren zur Erfassung der Steigung und/oder Bodenbeschaffenheit. Hierdurch kann vorteilhaft ein Erfassen des Arbeitsbereichs weiterhin optimiert werden. Insbesondere kann eine Genauigkeit bei der Erfassung der Grenze gesteigert werden.

Ferner geht die Erfindung aus von einem System, insbesondere zur Durchführung des genannten Verfahrens, mit einem autonomen Arbeitsgerät, insbesondere einem autonomen Rasenmäher, welches zu einer Bearbeitung eines Arbeitsbereichs vorgesehen ist.

Es wird vorgeschlagen, dass das System zumindest eine erste Erfassungseinheit zu einer Erfassung einer Umgebung und zumindest eine zweite Erfassungseinheit zu einer Erfassung des Arbeitsbereichs innerhalb der Umgebung aufweist. Vorteilhaft sind die erste Erfassungseinheit und die zweite Erfassungseinheit zumindest teilweise einstückig ausgebildet. Durch eine solche Ausgestaltung kann eine vorteilhafte Erfassung eines Arbeitsbereichs eines autonomen Arbeitsgeräts bereitgestellt werden. Insbesondere kann eine Erfassung einer Mehrzahl an Arbeitsbereichen in der Umgebung ermöglicht werden, welche insbesondere auch miteinander kombiniert und/oder zusammengelegt werden können. Ferner können auf vorteilhaft einfache Art Unter-Arbeitsbereiche definiert werden. Weiterhin kann vorteilhaft ein Definieren des Arbeitsbereichs schneller durchgeführt werden. Ferner kann zudem vorteilhaft eine sichere und/oder zuverlässige Definition des Arbeitsbereichs erreicht werden. Weiterhin können Gefahren für das autonome Arbeitsgerät vorteilhaft schneller detektiert werden.

Des Weiteren wird vorgeschlagen, dass das System zumindest eine mobile Einheit aufweist, welche die erste und/oder die zweite Erfassungseinheit zumindest teilweise aufweist. Insbesondere ist unter einer mobilen Einheit eine Kamera und/oder ein Smartphone und/oder ein Laptop und/oder eine Brille, welche insbesondere eine Aufnahme-Funktion aufweist und/oder eine weitere einem Fachmann als sinnvoll erscheinende Einheit. Insbesondere weist die mobile Einheit eine Übertragungseinheit auf, welche insbesondere dazu vorgesehen ist, die von der ersten und/oder zweiten Erfassungseinheit aufgenommenen Daten an das autonome Arbeitsgerät zu übertragen. Unter "Daten" soll in diesem Zusammenhang insbesondere die erfasste Umgebung und/oder der definierte Arbeitsbereich und/oder den Verlauf der Positionskenngrößen des autonomen Arbeitsgeräts und/oder des Markierungsobjekts verstanden werden, welche vorzugsweise mit Koordinaten und/oder odometrischen Größen beschrieben werden. Insbesondere weist das autonome Arbeitsgerät eine Schnittstelle auf, die eine Übertragung der Daten ermöglicht. Insbesondere können die Daten zumindest im Wesentlichen zeitgleich zu einer Erfassung der Daten an die Schnittstelle des autonomen Arbeitsgeräts übertragen. Alternativ wäre vorstellbar, dass die Daten vorerst zwischengespeichert und eine Übertragung zeitlich erst später erfolgt. Die mobile Einheit ist insbesondere mittels einer Kabelverbindung und/oder einer Steckverbindung und/oder einer Funkverbindung, insbesondere mittels Bluetooth, und/oder einer weitere einem Fachmann als sinnvoll erscheinende Verbindung mit dem autonomen Arbeitsgerät verbunden. Vorteilhaft wird die mobile Einheit auf dem Rasenmäher befestigt, vorzugsweise mittels einer Steckverbindung und/oder einer Rastverbindung. Alternativ wird die mobile Einheit in dem ersten Verfahrensschritt und/oder zweiten Verfahrensschritt von dem Nutzer gehalten. Hierdurch kann vorteilhaft eine komfortable, einfache, intuitive und kraftschonende Erfassung eines Arbeitsbereichs erreicht werden. Ferner kann vorteilhaft eine Flexibilität weiter gesteigert werden.

Es wird ferner vorgeschlagen, dass die erste und/oder die zweite Erfassungseinheit zumindest teilweise Teil des autonomen Arbeitsgeräts ist. Unter "zumindest teilweise Teil des autonomen Arbeitsgeräts" soll insbesondere verstanden werden, dass die erste und/oder zweite Erfassungseinheit vorteilhaft vollständig Teil des autonomen Arbeitsgeräts ist, wobei alternativ zusätzlich mittels einer mobilen Einheit, insbesondere einem Smartphone und/oder einer Drohne und/oder mittels GPS eine Erfassung durchgeführt wird. Hierdurch kann eine Erfassung eines Arbeitsbereichs weiterhin optimiert werden. Hierdurch kann vorteilhaft eine Flexibilität weiter gesteigert werden.

In einer weiteren Ausgestaltung wird vorgeschlagen, dass die erste und/oder die zweite Erfassungseinheit zumindest teilweise einstückig ausgebildet sind. Hierdurch kann vorteilhaft ein System vereinfacht werden.

Weiterhin wird vorgeschlagen, dass das System eine Markierungseinheit aufweist, welche ein Markierungsobjekt zu einer Definition des Arbeitsbereichs bereitstellt. Unter einer "Markierungseinheit" soll insbesondere eine Einheit verstanden werden, welche insbesondere dazu vorgesehen ist, das Markierungsobjekt vorzugsweise entlang einer Grenze des Arbeitsbereichs zu bewegen. Insbesondere wird die Markierungseinheit mittels des Nutzers entlang der Grenze bewegt, insbesondere geschoben und/oder getragen und/oder gesteuert, insbesondere mittels einer Fernsteuerung. In zumindest einer weiteren Ausgestaltung der Erfindung ist die Markierungseinheit zumindest teilweise als zumindest ein weiteres Arbeitsgerät ausgebildet, welches vorzugsweise dazu vorgesehen ist, das Markierungsobjekt entlang einer Grenze zu bewegen. Alternativ oder zusätzlich weist die Markierungseinheit zumindest eine Lichtquelle, insbesondere eine Laserlichtquelle, auf und ist besonders vorteilhaft als ein Laserpointer ausgebildet, wobei ein Laserpunkt das Markierungsobjekt bereitstellt. Hierdurch kann vorteilhaft eine Flexibilität weiter gesteigert werden. Weiterhin kann eine Erfassung des Arbeitsbereichs vorteilhaft vereinfacht werden.

Ferner wird vorgeschlagen, dass die Markierungseinheit zumindest ein Abrollelement aufweist, welches zu einem Abrollen auf einem Untergrund vorgesehen ist. Vorzugsweise wird das Abrollelement entlang einer Grenze des Arbeitsbereichs geführt. Das Abrollelement kann dabei insbesondere als eine Walze, als ein Rad und/oder als eine Scheibe ausgebildet sein. Hierdurch kann ein Definieren eines Arbeitsbereichs möglichst komfortabel bereitgestellt werden.

Das Verfahren und/oder das System sollen hierbei nicht auf die oben beschriebene Anwendung und Ausführungsform beschränkt sein. Insbesondere kann das Verfahren und/oder das System zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: Ein System mit einem autonomen Arbeitsgerät in einer schematischen Darstellung,
- Fig. 2: eine beispielhafte Umgebung, welche von dem autonomen Arbeitsgerät zumindest teilweise zu bearbeiten ist, in einer schematischen Darstellung,
- Fig. 3: einen beispielhaften Arbeitsbereich in der Umgebung in einer schematischen Darstellung,
- Fig. 4: ein alternatives System mit einem weiteren autonomen Arbeitsgerät in einer schematischen Darstellung und
- Fig. 5: ein weiteres alternatives System mit einem weiteren autonomen Arbeitsgerät in einer schematischen Darstellung.

### Beschreibung der Ausführungsbeispiele

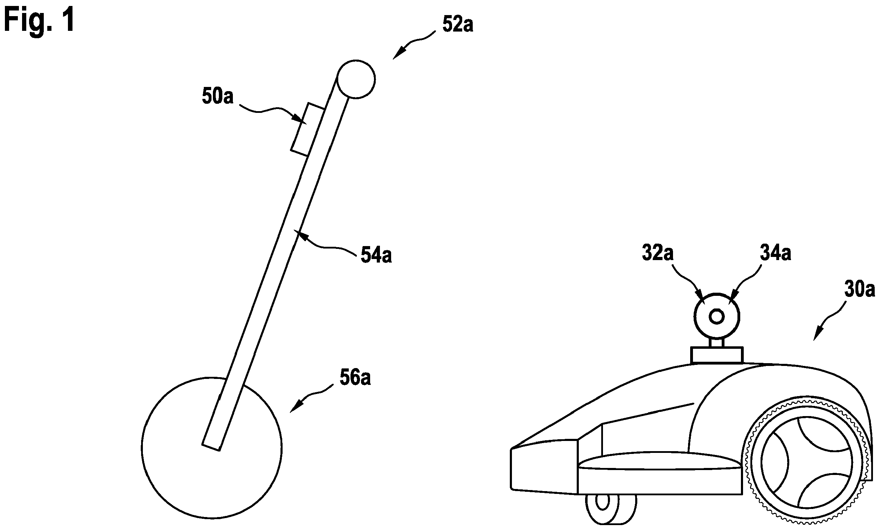

Die Figur 1 zeigt eine schematische Darstellung eines Systems mit einem autonomen Arbeitsgerät 30a. Das autonome Arbeitsgerät 30a ist als ein autonomer Rasenmäher ausgebildet. Der autonome Rasenmäher ist dazu vorgesehen, eine als Rasenfläche ausgebildete Arbeitsfläche zu bearbeiten. Das autonome Arbeitsgerät 30a umfasst eine als Mähwerkeinheit ausgebildete Arbeitsflächenbearbeitungseinheit. Die Arbeitsflächenbearbeitungseinheit wird mittels einer Antriebseinheit des autonomen Arbeitsgeräts 30a angetrieben.

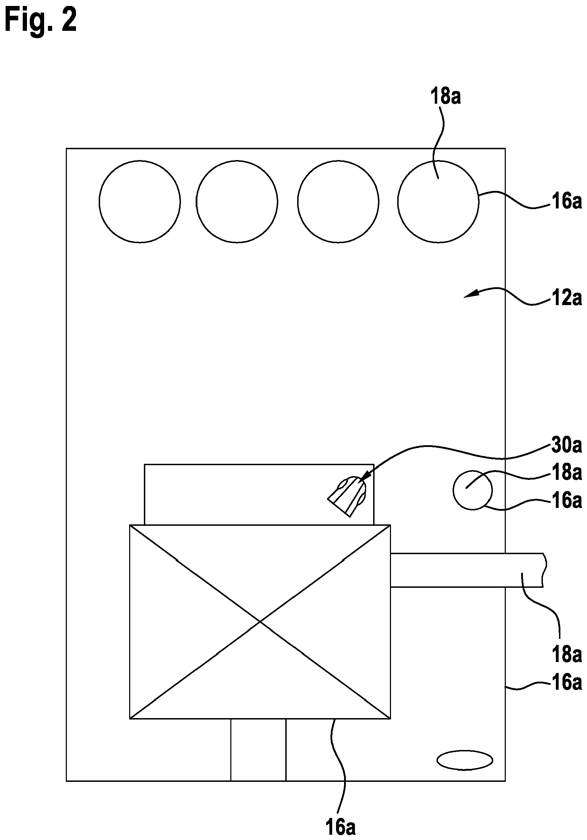

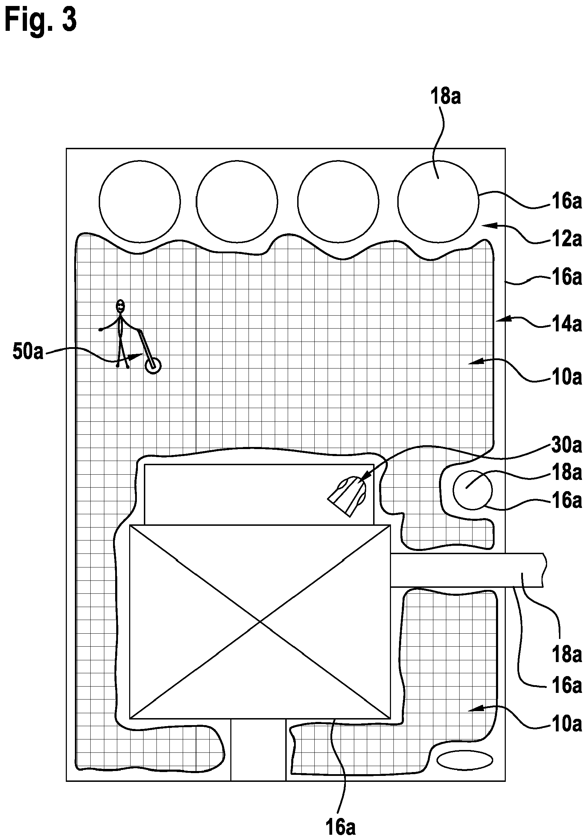

Das autonome Arbeitsgerät 30a umfasst zumindest eine erste Erfassungseinheit 32a zu einer Erfassung einer Umgebung 12a (vgl. Figur 2). Das autonome Arbeitsgerät 30a weist zumindest eine zweite Erfassungseinheit 34a zu einer Erfassung zumindest eines Arbeitsbereichs 10a innerhalb der Umgebung 12a auf (vgl. Figur 3). Die erste Erfassungseinheit 32a ist zu einer Erfassung eines Lage- und/oder Formparameters der Umgebung 12a vorgesehen. Die zweite Erfassungseinheit 34a ist zu einer Erfassung eines Lage- und/oder Formparameters des Arbeitsbereichs 10a vorgesehen. Die erste und die zweite Erfassungseinheit 32a, 34a sind zumindest teilweise einstückig ausgebildet. Die erste Erfassungseinheit 32a und/oder die zweite Erfassungseinheit 34a weisen jeweils eine Sensoreinheit auf. Die jeweilige Sensoreinheit ist dazu vorgesehen, zumindest eine Kenngröße und/oder eine physikalische Eigenschaft aufzunehmen. Die erste Erfassungseinheit 32a und/oder zweite Erfassungseinheit 34a weisen jeweils eine Recheneinheit auf.

Das System weist eine Markierungseinheit 52a auf, welche ein Markierungsobjekt 50a zu einer Definition des Arbeitsbereichs 10a bereitstellt. Die Markierungseinheit 52a wird bei der Definition des Arbeitsbereichs 10a von einem Nutzer entlang einer Grenze 14a des Arbeitsbereichs 10a bewegt. Die Markierungseinheit 52a wird entlang der Grenze 14a geschoben. Die Markierungseinheit 52a ist dazu vorgesehen, das Markierungsobjekt 50a entlang einer Grenze 14a eines Arbeitsbereichs 10a zu bewegen. Das Markierungsobjekt 50a ist dazu vorgesehen, eine Grenze 14a des Arbeitsbereichs 10a zumindest teilweise zu markieren. Das Markierungsobjekt 50a ist als Sender ausgebildet. Das Markierungsobjekt 50a überträgt aktiv ein elektromagnetisches Signal an die zweite Erfassungseinheit 34a. Das Markierungsobjekt 50a überträgt zumindest eine Positionskenngröße an die zweite Erfassungseinheit 34a. Das Markierungsobjekt 50a emittiert elektromagnetische Wellen, welche von der zweiten Erfassungseinheit 34a erfasst werden.

Die Markierungseinheit 52a weist zumindest ein Abrollelement 56a auf, welches zu einem Abrollen auf einem Untergrund, und zwar einem Teil der Arbeitsfläche, vorgesehen ist. Das Abrollelement 56a wird entlang der Grenze 14a des Arbeitsbereichs 10a geführt. Das Abrollelement 56a ist als ein Rad ausgebildet. Die Markierungseinheit 52a weist ein Stabelement 54a auf. Das Stabelement 54a hält das Abrollelement 56a. Das Stabelement 54a hält das Markierungsobjekt 50a.

Figur 2 zeigt beispielhaft eine schematische Darstellung der Umgebung 12a. In zumindest einem ersten Verfahrensschritt wird mittels der ersten Erfassungseinheit 32a die Umgebung 12a erfasst und in zumindest einem zweiten Verfahrensschritt wird mittels der zweiten Erfassungseinheit 34a der Arbeitsbereich 10a innerhalb der Umgebung 12a gemäß Figur 3 definiert.

Die Umgebung 12a wird in dem ersten Verfahrensschritt elektromagnetisch erfasst. Die Umgebung 12a wird in dem ersten Verfahrensschritt autonom erfasst. Die Umgebung 12a wird unabhängig von einer Bewegung eines Nutzers und/oder des Markierungobjekts 50a erfasst. Das autonome Arbeitsgerät 30a fährt während des ersten Verfahrensschritts autonom die Umgebung 12a ab. Alternativ kann das autonome Arbeitsgerät 30a während des ersten Verfahrensschritts auch an einer Stelle stehenbleiben und die Umgebung 12a erfassen. Es ist lediglich ein initiales Erfassen der Umgebung 12a notwendig. Bei der Erfassung der Umgebung 12a werden jegliche Elemente 16a, welche Teil der Umgebung 12a sind und von einer Bearbeitung durch das autonome Arbeitsgerät 30a auszuschließen sind, erfasst. Die Elemente 16a werden jeweils als Hindernisse 18a markiert. Übersichtshalber wurden nicht alle Hindernisse 18a mit einem Bezugszeichen versehen. Die erfassten Elemente 16a werden bei einer Definition des Arbeitsbereichs 10a berücksichtigt. Die Hindernisse 18a werden bei einer Definition des Arbeitsbereichs 10a gemieden (vgl. Figur 3). Mittels der ersten Erfassungseinheit 32a wird eine grobe Karte des Arbeitsbereichs 10a die Elementen 16a umfassend erstellt.

Figur 3 zeigt beispielhaft eine schematische Darstellung des definierten Arbeitsbereichs 10a in der Umgebung 12a. Der Arbeitsbereich 10a ist vorliegend in mehrere Arbeitsteilbereiche aufgeteilt. In einem zweiten Verfahrensschritt wird der Arbeitsbereich 10a in der Umgebung 12a definiert. Der Arbeitsbereich 10a ist in der Umgebung 12a vorteilhaft flexibel veränderbar. In dem zweiten Verfahrensschritt wird der Arbeitsbereich 10a mit Hilfe des Markierungsobjekts 50a definiert. Das Markierungsobjekt 50a wird in dem zweiten Verfahrensschritt elektromagnetisch von der zweiten Erfassungseinheit 34a erfasst.

In dem zweiten Verfahrensschritt wird die durch den Nutzer initiierte Bewegung des Markierungsobjekts 50a erfasst. Der Nutzer bewegt dabei das Markierungsobjekt 50a entlang der zu definierenden Grenze 14a des Arbeitsbereichs 10a. Der Verlauf der Bewegung des Markierungsobjekts 50a bildet die Grenze 14a des Arbeitsbereichs 10a. Das autonome Arbeitsgerät 30a kann in dem zweiten Verfahrensschritt zumindest teilweise dem Markierungsobjekt 50a folgen. Alternativ kann das autonome Arbeitsgerät 50a während des zweiten Verfahrensschritts auch still stehen. Die Bewegung des Markierungsobjekts 50a wird zumindest weitgehend unabhängig von einer Bewegung des autonomen Arbeitsgeräts 30a erfasst. Eine Trajektorie des autonomen Arbeitsgeräts 30a unterscheidet sich in dem zweiten Verfahrensschritt zumindest teilweise von einer Trajektorie des Markierungsobjekts 50a. Das autonome Arbeitsgerät 30a bewegt sich während des zweiten Verfahrensschritts derart, dass eine Signalübertragung zwischen dem Markierungsobjekt 50a und der zweiten Erfassungseinheit sichergestellt ist. Die zweite Erfassungseinheit 34a kann dazu vorgesehen sein, weitere Hindernisse 18a bei einer Definition des Arbeitsbereichs 10a zu detektieren. Das Detektieren der weiteren Hindernisse 18a kann dabei während dem zumindest teilweisen Folgen des Markierungsobjekts 50a erfolgen.

In dem zweiten Verfahrensschritt wird zumindest eine Positionskenngröße des autonomen Arbeitsgeräts 30a erfasst. Die Positionskenngröße kennzeichnet die Position des autonomen Arbeitsgeräts 30a. Die Positionskenngröße wird mittels Sensoren einer dritten Erfassungseinheit des autonomen Arbeitsgeräts 30a bestimmt. Die Positionskenngröße wird mittels GPS und/oder odometrisch bestimmt. Die dritte Erfassungseinheit umfasst Sensoren zur Erfassung einer Steigung und/oder einer Bodenbeschaffenheit. Eine Recheneinheit des autonomen Arbeitsgeräts 30a ist dazu vorgesehen, anhand der Bewegung des Markierungsobjekts 50a zumindest eine weitere Positionskenngröße des Markierungsobjektes 50a zu bestimmen. Die Recheneinheit ist dazu vorgesehen, abhängig von der Positionskenngröße relativ zur weiteren Positionskenngröße eine Arbeitsbereichskarte gemäß Figur 3 zu erstellen. Die Arbeitsbereichskarte ist eine digitale Darstellung der Umgebung 12a und/oder des Arbeitsbereichs 10a. Die Arbeitsbereichskarte umfasst Informationen zu Höhen, Maßstab, Untergrundbeschaffenheit und/oder möglichen Hindernissen 18a. Die Arbeitsbereichskarte ist für den Nutzer zugreifbar, beispielsweise mittels einer Datenübertragung auf ein mobiles Endgerät. Die Arbeitsbereichskarte ist vom Nutzer änderbar. Das autonome Arbeitsgerät 30a greift bei einer Bearbeitung des Arbeitsbereichs 10a auf die Arbeitsbereichskarte zu. Alternativ werden bei der Generierung der Arbeitsbereichskarte lediglich Navigationsdaten für das autonome Arbeitsgerät 30a hinterlegt.

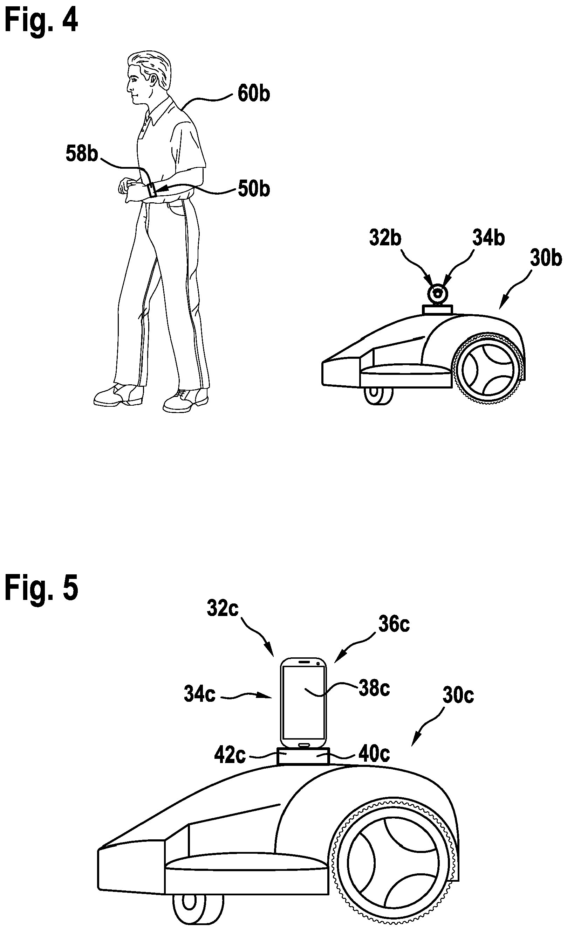

In den Figuren 4 und 5 sind weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 3, verwiesen werden kann. Zur Unterscheidung der Ausführungsbeispiele ist der Buchstabe a den Bezugszeichen des Ausführungsbeispiels in den Figuren 1 bis 3 nachgestellt. In den Ausführungsbeispielen der Figuren 4 und 5 ist der Buchstabe a durch die Buchstaben b und c ersetzt.

Figur 4 zeigt eine schematische Darstellung eines alternativen Systems mit einem weiteren autonomen Arbeitsgerät 30b. Das System umfasst ein Markierungsobjekt 50b. Das autonome Arbeitsgerät 30b weist eine erste Erfassungseinheit 32b und eine zweite Erfassungseinheit 34b auf. Die erste Erfassungseinheit 32b und/oder zweite Erfassungseinheit 34b sind jeweils als optische Kamera ausgebildet.

Das Markierungsobjekt 50b ist als ein Armband 58b ausgebildet, welches von einem Nutzer bei einer Definition eines Arbeitsbereichs 10b getragen werden kann. Die zweite Erfassungseinheit 34b ist dazu vorgesehen, das Markierungsobjekt 50b zu erfassen. Das Markierungsobjekt 50b wird optisch erfasst. Der Nutzer führt das Markierungsobjekt 50b während der Definition des Arbeitsbereichs 10b entlang einer zu definierenden Grenze 14b des Arbeitsbereichs 10b. Das autonome Arbeitsgerät 30b folgt dabei zumindest teilweise dem Markierungsobjekt 50b. Das autonome Arbeitsgerät 30b folgt dem Markierungsobjekt 50b insofern, dass eine optische Erfassung des Markierungsobjekts 50b durch die zweite Erfassungseinheit 34b sichergestellt ist.

Alternativ kann auch eine Silhouette 60b des Nutzers als Markierungsobjekt 50b verwendet werden. Die zweite Erfassungseinheit 34b ist dann dazu vorgesehen, die Silhouette 60b des Nutzers zu identifizieren.

Figur 5 zeigt eine schematische Darstellung eines weiteren alternativen Systems mit einem weiteren autonomen Arbeitsgerät 30c. Das System umfasst zumindest eine mobile Einheit 36c, welche eine erste Erfassungseinheit 32c und/oder eine zweite Erfassungseinheit 34c zumindest teilweise aufweist. Die mobile Einheit 36c ist als Smartphone 38c ausgebildet. Die mobile Einheit 36c ist dazu vorgesehen, eine Umgebung 12c zu erfassen. Die mobile Einheit 36c ist dazu vorgesehen, einen Arbeitsbereich 10c innerhalb der Umgebung 12c zu definieren. Die mobile Einheit 36c weist eine Übertragungseinheit 40c auf. Die Übertragungseinheit 40c ist dazu vorgesehen, die von der ersten Erfassungseinheit 32c und/oder der zweiten Erfassungseinheit 34c aufgenommenen Daten an das autonome Arbeitsgerät 30c zu übertragen. Die Daten werden zumindest im Wesentlichen zeitgleich zu einer Erfassung der Daten an eine Recheneinheit des autonomen Arbeitsgeräts 30c übertragen. Alternativ werden die Daten zu einer späteren Übertragung zwischengespeichert. Die Übertragung findet dann nach einer Erfassung der Umgebung 12c und/oder einer Definition des Arbeitsbereichs 10c statt. Die mobile Einheit 36c ist mittels der Übertragungseinheit 40c an dem autonomen Arbeitsgerät 30c befestigt. Die Übertragungseinheit 40c weist zur Befestigung der mobilen Einheit 36c eine Steckverbindung 42c auf. Es ist denkbar dass die mobile Einheit 36c zu einer Bearbeitung des Arbeitsbereichs 10c mit dem autonomen Arbeitsgerät 30c über die Übertragungseinheit 40c verbunden ist. Alternativ ist die mobile Einheit 36c lediglich zur Definition des Arbeitsbereichs 10c vorgesehen. Die zweite Erfassungseinheit 34c ist zumindest teilweise Teil des autonomen Arbeitsgeräts 30c. Die zweite Erfassungseinheit 30c ist zur Erfassung der Umgebung 12c vorgesehen. Alternativ weist das autonome Arbeitsgerät 30c eine dritte Erfassungseinheit zum selbständigen Bearbeiten des Arbeitsbereichs 10c auf.

Alternativ wird die mobile Einheit 36c in einem ersten Verfahrensschritt zur Erkennung der Umgebung 12c und/oder in einem zweiten Verfahrensschritt zur Definition des Arbeitsbereichs 10c von dem Nutzer gehalten und/oder geführt. Der Nutzer schwenkt und/oder führt lediglich die mobile Einheit 36c, wodurch die mobile Einheit 36c insbesondere mittels eingebauter Sensoren, insbesondere mittels zumindest einer Kamera und/oder mittels zumindest eines Beschleunigungssensors und/oder mittels zumindest eines GPS-Sensors, die Umgebung 12c und/oder den Arbeitsbereich 10c und/oder eine Grenze 14c des Arbeitsbereichs 10c erfasst. Aus der Bewegung wird eine Umgebung 12c erfasst und/oder ein Arbeitsbereich 10c definiert. Das autonome Arbeitsgerät 30c weist eine Schnittstelle auf. Die Schnittstelle ermöglicht eine drahtlose Übertragung der Daten.

## Patentansprüche

1. Verfahren zu einer Erfassung zumindest eines Arbeitsbereichs (10a; 10b; 10c) eines autonomen Arbeitsgeräts (30a; 30b; 30c), insbesondere eines autonomen Rasenmähers, insbesondere mittels zumindest einer ersten Erfassungseinheit (32a; 32b; 32c) und insbesondere mittels zumindest einer zweiten Erfassungseinheit (34a; 34b; 34c), **dadurch gekennzeichnet, dass** in zumindest einem ersten Verfahrensschritt, insbesondere mittels der ersten Erfassungseinheit (32a; 32b; 32c), eine Umgebung (12a; 12b; 12c) erfasst wird und in zumindest einem zweiten Verfahrensschritt, insbesondere mittels der zweiten Erfassungseinheit (34a; 34b; 34c), der Arbeitsbereich (10a; 10b; 10c) innerhalb der Umgebung (12a; 12b 12c) definiert wird.

2. Verfahren nach Anspruch 1, **dadurch gekennzeichnet, dass** in dem zweiten Verfahrensschritt der Arbeitsbereich (10a) mittels zumindest eines Markierungsobjekts (50a; 50b) definiert wird.

3. Verfahren nach Anspruch 2, **dadurch gekennzeichnet, dass** in dem zweiten Verfahrensschritt eine Bewegung des Markierungsobjekts (50a; 50b) erfasst wird.

4. Verfahren nach Anspruch 3, **dadurch gekennzeichnet, dass** die Bewegung des Markierungsobjekts (50a; 50b) zumindest weitgehend unabhängig von einer Bewegung des autonomen Arbeitsgeräts (30a; 30b) erfasst wird.

5. Verfahren nach einem der Ansprüche 2 bis 4, **dadurch gekennzeichnet, dass** das Markierungsobjekt (50a; 50b) in dem zweiten Verfahrensschritt elektromagnetisch erfasst wird.

6. Verfahren nach einem der vorhergehenden Ansprüche, **dadurch gekennzeichnet, dass** die Umgebung (12a; 12b) in dem ersten Verfahrensschritt elektromagnetisch erfasst wird.

7. Verfahren nach einem der vorhergehenden Ansprüche, **dadurch gekennzeichnet, dass** in zumindest einem Verfahrensschritt mittels einer Recheneinheit eine Karte des Arbeitsbereichs (10a; 10b, 10c) generiert wird.

8. Verfahren nach einem der vorhergehenden Ansprüche, **dadurch gekennzeichnet, dass** in dem zweiten Verfahrensschritt, zumindest eine Positionskenngröße des autonomen Arbeitsgeräts (30a; 30b; 30c) erfasst wird.

9. System, insbesondere zur Durchführung eines Verfahrens nach einem der vorhergehenden Ansprüche, mit einem autonomen Arbeitsgerät (30a; 30b 30c), insbesondere einem autonomen Rasenmäher, welches zu einer Bearbeitung eines Arbeitsbereichs (10a; 10b; 10c) vorgesehen ist, **gekennzeichnet durch** zumindest eine erste Erfassungseinheit (32a; 32b; 32c) zu einer Erfassung einer Umgebung (12a; 12b; 12c) und zumindest eine zweite Erfassungseinheit (34a; 34b; 34c) zu einer Erfassung des Arbeitsbereichs (10a; 10b; 10c) innerhalb der Umgebung (12a; 12b; 12c).

10. System nach Anspruch 9, **gekennzeichnet durch** zumindest eine mobile Einheit (36c), welche die erste und/oder die zweite Erfassungseinheit (32c; 34c) zumindest teilweise aufweist.

11. System nach Anspruch 9 oder 10, **dadurch gekennzeichnet, dass** die erste und/oder die zweite Erfassungseinheit (32a; 32b; 34a; 34c) zumindest teilweise Teil des autonomen Arbeitsgeräts (30a; 30b 30c) ist.

12. System nach einem der Ansprüche 9 bis 11, **dadurch gekennzeichnet, dass** die erste und/oder die zweite Erfassungseinheit (32a; 32b; 32c; 34a; 34b; 34c) zumindest teilweise einstückig ausgebildet sind.

13. System nach einem der Ansprüche 9 bis 12, **gekennzeichnet durch** eine Markierungseinheit (52a; 52b), welche ein Markierungsobjekt (50a; 50b) zu einer Definition des Arbeitsbereichs (10a; 10b) bereitstellt.

14. System nach Anspruch 13, **dadurch gekennzeichnet, dass** die Markierungseinheit (52b) zumindest ein Abrollelement (56b) aufweist, welches zu einem Abrollen auf einem Untergrund vorgesehen ist.
